# EUROPEAN PATENT SPECIFICATION

(11) **EP 4 313 779 B1**
(45) Date of publication and mention of the grant of the patent: **11.12.2024**
(21) Application number: 22711336.2
(22) Date of filing: 17.03.2022
(51) Int. Cl.: B65B 35/04, B65B 35/30, B65G 29/02, B65G 35/06, B65G 35/08, B65G 43/08, B65G 47/51, B65G 47/53, B65G 47/84, B65G 47/90, B65G 65/23

(54) **MACHINE FOR PACKAGING PRODUCTS OF THE TOBACCO INDUSTRY, PARTICULARLY SNUS**
MASCHINE ZUM VERPACKEN VON PRODUKTEN DER TABAKINDUSTRIE, INSBESONDERE SNUS
MACHINE D'EMBALLAGE DE PRODUITS DE L'INDUSTRIE DU TABAC, EN PARTICULIER DU TABAC HUMIDE

(30) Priority: 26.03.2021 IT 202100007430
(43) Date of publication of application: 07.02.2024
(73) Proprietor: Sasib S.p.A., 40013 Castel Maggiore (BO) (IT)
(72) Inventor: GHIOTTI, Roberto, 40013 Castel Maggiore (Bologna) (IT)
(74) Representative: Buzzi, Notaro & Antonielli d'Oulx S.p.A.
(86) International application number: PCT/IB2022/052434
(87) International publication number: WO 2022/200942

(56) References cited:
- DE-A1- 102019 126 522
- FR-A1- 2 950 615

## Description

The present invention relates to a machine (see e.g. DE 10 2019 126522) for packaging products of the tobacco industry, particularly snus.

The solution described here has been devised for a particular application in which snus is fed to the packaging machine inside containers (also called pockets).

The object of this solution is to provide a packaging machine capable of transferring the products from the containers into packages being formed inside the machine, without adversely affecting the operating cycle of the machine.

A preferred embodiment of the solution described here relates to a machine for packaging the products in loose form in sachets or pouches.

The aforementioned object is achieved by using a packaging machine having the characteristics specified in Claim 1.

The present invention also relates to a method according to Claim 10.

The claims form an integral part of the teachings provided here.

Further characteristics and advantages of the present invention will be apparent from the following description, which refers to the attached drawings provided purely by way of non-limiting example, in which:
- Figure 1 shows a preferred embodiment of the machine described here, in an axonometric view;

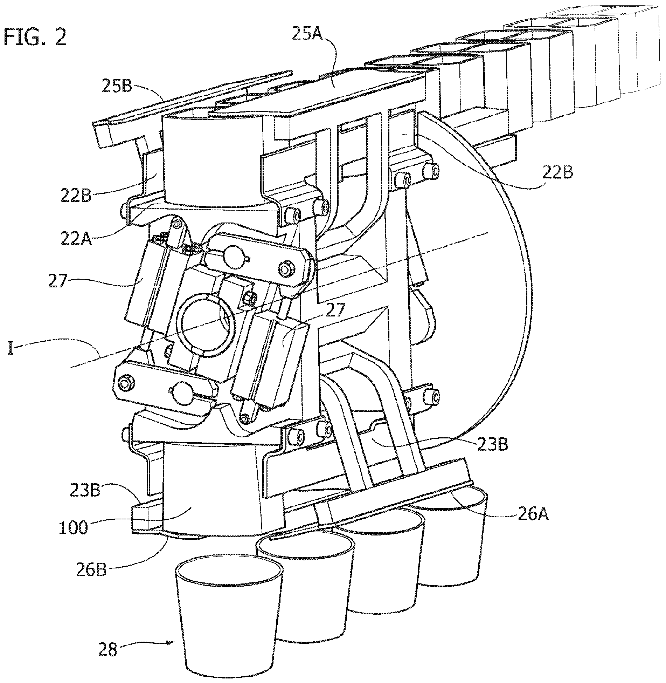

- Figure 2 shows a side view of the machine of Figure 1;
- Figures 3a to 3g show successive steps of the operation of the machine of Figure 1.

The following description illustrates various specific details intended to provide a deeper understanding of the embodiments. The embodiments may be realized without one or more of the specific details, or with other methods, components or materials, etc. In other cases, known structures, materials or operations are not shown or described in detail, to avoid obscuring various aspects of the embodiment.

The references used here are purely for convenience and therefore do not define the scope of protection or the extent of the embodiments.

As mentioned above, the packaging machine described here has been devised for a particular application in which the products to be packaged are fed to the packaging machine inside containers.

Inside the containers, the products to be packaged are arranged in groups corresponding to the groups of products to be packaged in the individual packages.

The solution described here transfers each group of products from its respective container to a respective pre-formed package.

In a preferred embodiment, the packaging machine described here operates to package the products in loose form in sachets or pouches.

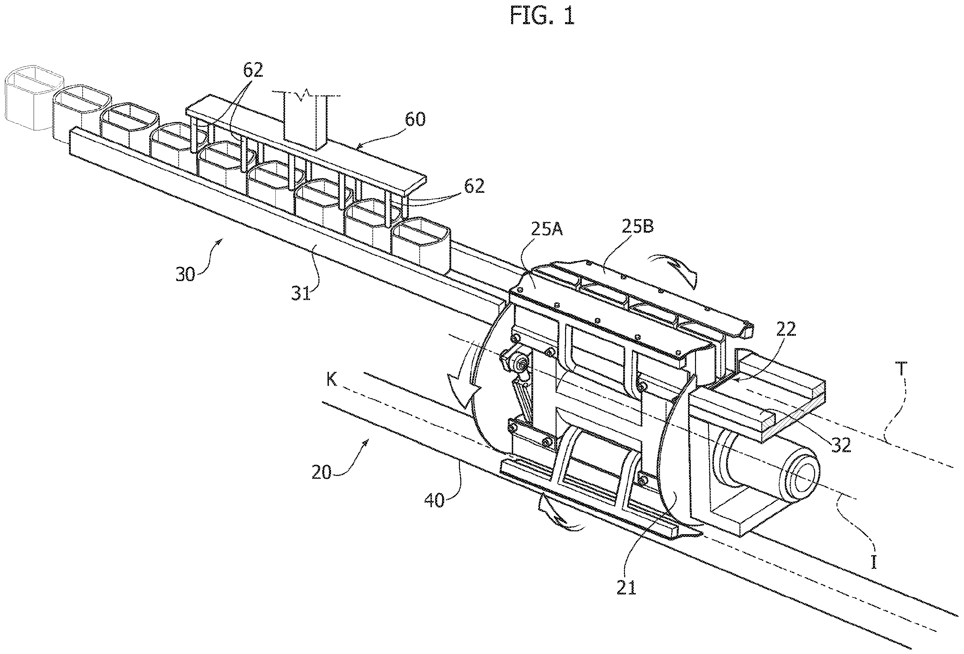

With reference to Figure 1, in general terms, the machine described here comprises:
- at least one conveyor 30 for feeding a plurality of containers 100 containing the products S along a conveying path T;
- a unit 40 for feeding packages 200 along a feeding direction K; and
- an overturning unit 20, which is positioned along the conveying path T and is arranged to receive at least one container containing a group of products S and to overturn it to discharge the products into one of the packages advancing along the feeding direction K.

The overturning unit 20 comprises a rotor 21 comprising a first housing 22, for receiving at least one first container, and a second housing 23 for receiving at least one second container.

The rotor 21 is rotatable around a horizontal rotation axis I for making the first and the second housing 22, 23 reciprocally swap positions, between a first position P1 for loading the containers 100 and a second position P2 for discharging the products from the containers 100 into the packages 200 that are fed along the feeding direction K.

In one or more preferred embodiments, such as that which is illustrated, the housings 22, 23 are positioned diametrically opposite each other with respect to the axis of rotation I of the rotor. Preferably, the positions P1 and P2 are defined on the same vertical line.

In one or more preferred embodiments, such as that which is illustrated, the second housing 22 is delimited by a bottom 22A and by two lateral abutment parts 22B, which are opposed to each another with respect to the bottom 22A. The bottom 22A and the lateral parts 22B extend along a direction parallel to the axis of rotation I.

The housing 23 has an identical configuration and is, in particular, delimited by a bottom 23A and by two lateral abutment parts 23B.

The two housings 22, 23 are oriented in opposite directions around the rotation axis I of the rotor so that the housing 22 or 23 that is in position P1 has its lateral parts 22B, 23B above the bottom 22A or 23A, and the housing 23 or 22 that is in position P2 has its lateral abutment parts 23B or 22B below the bottom 23A or 23B.

In the loading position P1, the housings 22 and 23 each receive a predetermined group of containers in an arrangement in which the containers rest on the bottom 22A or 23A, with their respective upper openings facing upwards, and are ordered in line along a direction parallel to the axis of rotation I.

In a preferred application, the individual container 100 has an internal wall that divides it into two compartments 100A, 100B, each intended to receive a group of products to be packaged in a respective package 200.

The internal wall also divides the upper mouth of the container into two separate upper openings 100'A, 100'B.

Also according to this preferred application, within the housings 22, 23 the containers 100 are arranged with their respective internal walls parallel to the lateral parts 22B or 23B, so that one of the respective compartments 100A, 100B is positioned nearer to one lateral part of the housing, while the other is positioned nearer to the opposite lateral part.

The overturning unit 20 also comprises closing members 25A, 25B and 26A, 26B associated with the housings 22 and 23 respectively, which perform the function of selectively opening and closing the upper openings 100'A and 100'B of the containers 100 arranged in the housings 22, 23.

In particular, the two closing members 25A, 25B are positioned on opposite sides of the housing 22, outside the lateral parts 22B, and are mounted on the rotor 21 in a pivoting manner about respective axes of rotation parallel to the axis of rotation I.

Respective actuators 27 drive the two closing members 25A, 25B between a position for closing the containers 100, in which the two members 25A, 25B are placed against or close to the corresponding lateral parts 22B, and an opening position, for discharging the products from the containers 100, in which the two members 25A, 25B are spaced apart from the lateral parts 22B.

Each closing member comprises a covering body 25' which, in the aforesaid closing position, projects beyond the corresponding lateral part 22B, to close the upper openings 100'A or 100'B of the containers 100; in particular, the covering body 25' of the member 25A closes the upper openings 100'A, which the covering body 25' of the member 25B closes the upper openings 100'B.

The two closing members 26A, 26B are mounted at the housing 23 in a similar arrangement and have an identical configuration; in the figures, the corresponding covering bodies are indicated by the reference numeral 26'.

In operation, each pair of members 25A, 25B or 26A, 26B is brought to the opening position when the respective housing 22 or 23 is in the loading position P1 for receiving the containers 100.

The two members 25A, 25B or 26A, 26B are then brought to the closing position, this taking place before the rotor 21 is rotated to swap the positions of the two housings 22, 23.

The rotor 21 is then rotated to swap the positions of the two housings, bringing the housing 22 or 23 into the discharge position P2.

When the housing 22 or 23 is in the position P2, the two members 25A, 25B or 26A, 26B are brought back to the opening position individually, at two successive moments, to discharge the products of compartments 100A in a first step, and to discharge the products of compartments 100B in a second step.

The groups of products discharged during the first step are made to fill respective containers 200 brought to position P2 by the feeding unit 40, and the groups of products discharged in the second step are made to fill further packages 200' which are subsequently fed to position P2 by the feeding unit.

Preferably, funnel-like bodies 28 are positioned under the rotor 21 to guide the products in free fall and to ensure that they enter the respective packages 200 or 200'.

In one or more preferred embodiments, such as that which is illustrated, the covering bodies 25' and 26' have an extension such that they project beyond the corresponding lateral part 22B or 23B even in the opening position of the closing member. Thus, by means of the respective bodies 25', 26', the closing members can support the containers 100 vertically when the housing 22 or 23 is in position P2 and the containers 100 are therefore upside down.

In one or more preferred embodiments, such as that which is illustrated, the packaging machine comprises an inlet channel 31 for bringing the containers 100 containing the products S to the overturning unit 20, and an outlet channel 32 for bringing the empty containers to an outlet of the machine. The two channels 31 and 32 form the aforementioned conveyor 30 for making the containers 100 advance along the advance path T.

In position P1, the housing 22 or 23 joins the inlet channel and the outlet channel to each other.

The machine also comprises a drive device 60 for picking the group of containers 100 from the inlet channel and bringing it into the housing 22 or 23. By the same action, the drive device simultaneously removes from said housing the group of empty containers whose products have already been discharged, and releases them into the outlet channel 32.

The drive device 60 comprises a series of equally spaced engagement members 62, for simultaneously engaging with the containers of the group to be picked, spacing them apart by a predetermined interval F. Thus the containers 100 can be positioned inside the housings 22, 23 at the same spacing.

The interval in question may be determined on the basis of the interval between the upper openings of the packages 200 fed by the feeding unit.

The packaging machine comprises a control unit 50 capable of operating the actuators and devices described above in a coordinated way, for executing the packaging method described here. Preferably, the control unit 50 is designed to receive a signal W1 indicative of the angular position of the rotor 21, and to cause the closing members 25A, 25B, 26A, 26B to open in accordance with said signal.

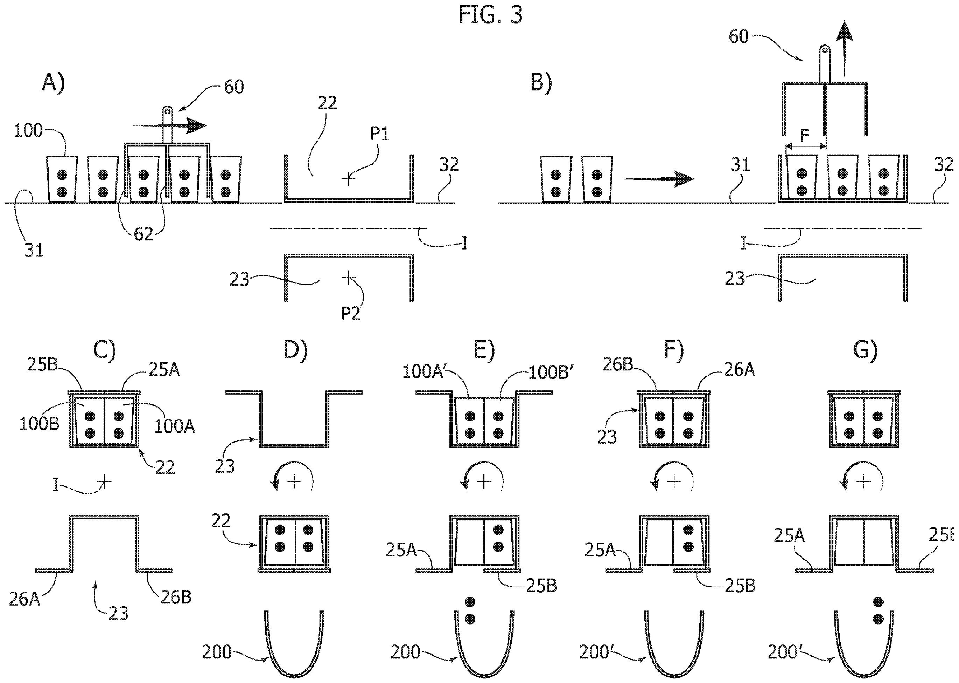

In one or more preferred embodiments (see Figure 3), the packaging method comprises the following steps:
- by means of the drive device, picking a group of containers from the inlet channel and bringing it into the housing 22 or 23 of the overturning unit 20 (steps a) and b) in Figure 3);
- rotating the rotor 21 around the axis of rotation I until the housing 22 or 23 is brought into position P2 and the housing 23 or 22 is simultaneously brought into position P1 (step c) of Figure 3);
- feeding a number of packages equal to the number of containers 100 loaded into the housing 22 or 23, at position P2 (step d) of Figure 3);
- driving the closing member 25A or 26A from the closing position to the opening position, so as to discharge the products of compartments 100A of containers 100 into the packages 200 in position P2 (step e) of Figure 3);
- feeding further packages 200', again in a number equal to the number of loaded containers 100, to position P2 (step f) of Figure 3);
- driving the closing member 25B or 26B from the closing position to the opening position, so as to discharge the products of the compartments 100B into the packages 200' in the discharge position P2 (step g) of Figure 3).

Preferably, during the two steps of discharging the products from the containers 100 at position P2, the drive device picks a new group of containers 100 from the inlet channel and brings it into the housing 23 or 22 which is located in position P1.

In general terms, it should be noted that there are other possible applications in which the containers 100 each have a single compartment. For these applications, the overturning unit 20 may comprise a single closing member associated with each housing 22 or 23, and a single step of discharging the products at position P2 is carried out during operation.

It is also possible to envisage embodiments of the packaging machine in which one container at a time is loaded into the housings, and the housings therefore have a reduced extension (along the axis of rotation I) which is sufficient for housing a single container.

Clearly, provided that the principle of the invention is retained, the details of construction and forms of embodiment can be varied, even to a significant degree, from what has been illustrated herein purely by way of non-limiting example, without thereby departing from the scope of the invention, as defined in the attached claims.

## Claims

1. Machine (10) for packaging products of the tobacco industry, particularly snus, comprising:
- at least one conveyor (30) for feeding a plurality of containers (100) containing the products along a conveying path (T);
- a unit (40) for feeding packages (200) along a feeding direction (K); **characterised by**
- an overturning unit (20) which is arranged along the conveying path (T) and which comprises:
- a rotor (21) comprising a first housing (22), for receiving at least one first container, and a second housing (23) for receiving at least one second container, the rotor (21) being rotatable around a horizontal rotation axis (I) for making the first and the second housing (22, 23) reciprocally swap positions, between a first position (P1) for loading the containers and a second position (P2) for unloading the products from the containers (100), into the packages (200) that are fed along the feeding direction (K),
- at least one first closing member (25A, 25B) for closing an upper opening (100A', 100B') of the container positioned in the first housing (22), and at least one second closing member (26A, 26B) for closing an upper opening (100A', 100B') of the container positioned in the second housing (23), the at least one first closing member (25A, 25B) and the at least one second closing member (26A, 26B) being mounted on the rotor (21) so as to be movable between a closing position and a position for opening the containers, and
- a control unit (50), which is configured to command the first or the second closing member (25A, 25B, 26A, 26B) to the opening position so as to unload the products through the upper opening of the container that is positioned in the first or second housing (22, 23), when the first or the second housing (22, 23) is in the unloading position (P2).

2. Machine according to claim 1, wherein the first and the second housings (22, 23) are positioned diametrically opposed to one another with respect to the rotation axis of the rotor.

3. Machine according to claim 1 or 2, wherein
- the first housing (22) is delimited by a bottom (22A) and by two lateral abutment parts (22B), which are opposed to one another with respect to the bottom, the bottom (22A) and the lateral parts (22B) extending along a direction that is parallel to the rotation axis (I) of the rotor;
- the second housing (23) is delimited by a bottom (23A) and by two lateral abutment parts (23B), which are opposed to one another with respect to the bottom, the bottom (23A) and the lateral parts (23B) extending along a direction that is parallel to the rotation axis (I) of the rotor; and
- the first and the second housings (22, 23) are oriented in opposite directions around the rotation axis (I) of the rotor so that the first or the second housing that is in the loading position (P1) has the abutment lateral parts (22B, 23B) above the bottom (22A, 23A) of the housing, and the second or first housing that is in the unloading position (P2) has the abutment lateral parts (23B, 22B) above the bottom (23A, 22A) of the housing.

4. Machine according to claim 3, wherein each of the at least one first closing member (25A 25B) and the at least one second closing member (26A, 26B) is positioned on a side of the respective compartment (22, 23), and can pivot around a rotation axis that is parallel to the rotation axis (I) of the rotor, and wherein each of the at least one closing member (25A, 25B) and the at least one second closing member (26A, 26B) comprises a covering body (25', 26') that projects beyond a corresponding abutment lateral part of the housing, towards the inside of the housing, for closing the upper opening of the container positioned in the housing.

5. Machine according to claim 4, in which in the opening position, the covering body (25', 26') maintains itself, with a part thereof, projecting beyond the abutment lateral part (22B, 23B), so as to vertically support the container positioned in the housing.

6. Machine according to claim 3, wherein the at least one first closing member includes two closing members (25A, 25B) positioned on opposite sides of the first housing (22), for selectively opening and closing corresponding upper openings (100A', 100B') of the container (100) positioned in the first housing (22), and wherein the at least one second closing member includes two closing members (26A, 26B) positioned on opposite sides of the second housing (23), for selectively opening and closing respective upper openings (100A', 100B') of the container (100) positioned in the second housing (23).

7. Machine according to claim 3, wherein the at least one conveyor (30) comprises an inlet channel (31) for bringing the containers containing the products to the overturning unit (20), and an outlet channel (32) for bringing the empty containers to an outlet of the machine, wherein, in the loading position (P1), the first or second housing (22, 23) joins the inlet channel (31) and the outlet channel (32) to each other. and wherein the machine comprises a drawing device (60) for bringing at least one container that is in the inlet channel (31), to the first or the second housing (22, 23) of the overturning unit (20), and contemporarily at least one container positioned in the first or second housing (22, 23), to the outlet channel (32).

8. Machine according to claim 7, wherein the first and the second housing (22, 23) of the overturning unit (20) each have a length, along the rotation axis (I) of the rotor, such that it can house a predetermined number of containers, and wherein the drawing device (60) comprises a series of engaging members (62) equally spaced from one another, for contemporarily engaging a number of containers equal to the predetermined number, keeping them at a distance from one another of a given pitch.

9. Machine according to any one of the preceding claims, comprising a unit for dispensing a predetermined quantity of water into the packages (200) into which the products have been unloaded.

10. Method for packaging products (S) that are transported inside containers to a packaging machine,
comprising the steps of:
- at a position (P1) for loading the containers, receiving at least a first container containing products, in a first housing (22) made in a rotor (21) of an overturning unit (20), which can rotate about a horizontal rotation axis (I);
- rotating the rotor (21) around the rotation axis (I) until the first housing (22) is brought to a position (P2) for unloading the products from the containers, and, contemporarily, bringing a second housing (23) provided in the rotor (21) to the position (P1) for loading the containers;
- feeding one or more packages (200), preferably sachets, to a region underlying the unloading position (P2);
- driving a first member (25A, 25B) for closing the containers that is associated to the first housing (22), from a closing position to an opening position, so as to unload the products throughout an upper opening (100A', 100B') of the at least one first container positioned in the first housing (22), into one or more underlying packages (200);
- at the loading position (P1), receiving at least one second container containing products, in the second housing (23) of the rotor (21);
- rotating the rotor (21) around the rotation axis (I) for making the first and the second housing (22, 23) swap positions, so as to bring the first housing (22) and the at least one first container, empty, to the loading position (P1), and the second housing (23) and the at least one second container, containing the products, to the unloading position (P2);
- feeding a new package or new packages (200') to the region underlying the unloading position (P1);
- driving a second member (26A, 26B) for closing the containers that is associated to the second housing (23), from a closing position to an opening position, so as to unload the products throughout an upper opening (100A', 100B') of the at least one second container positioned in the second housing (23), into a new underlying package or new underlying packages (200; 200').

11. Method according to claim 10, wherein
- the first housing (22) is delimited by a bottom (22A) and by two lateral abutment parts (22B), which are opposed to one another with respect to the bottom (22A);
- the second housing (23) is delimited by a bottom (23A) and by two lateral abutment parts (23B), which are opposed to one another with respect to the bottom (23A); and
- the step of receiving at least one first container in a first housing (22), or receiving at least one second container in a second housing (23), includes, by means of a drawing device (60), bringing the at least one first or second container from an inlet channel (31) upstream of the overturning unit (20), into the first or second housing (22, 23), and contemporarily bringing at least one empty container that is positioned in the first or second housing (22, 23), to an outlet channel (32) downstream of the overturning unit (20).

12. Method according to claim 11, wherein the step of bringing at least one or second container from an inlet channel (31) upstream of the overturning unit (20), into the first or second housing (22, 23), includes bringing a predetermined number of containers into the first or second housing (22, 23), and the step of bringing an empty container that is positioned in the first or second housing (22, 23), to an outlet channel (32), includes bringing a number of containers equal to the predetermined number, to the outlet channel (32).

## Patentansprüche

1. Maschine (10) zum Verpacken von Produkten der Tabakindustrie, insbesondere Oraltabak, umfassend:
- mindestens einen Förderer (30) zum Zuführen einer Mehrzahl von die Produkte enthaltenden Behältern (100) entlang eines Förderpfads (T);
- eine Einheit (40) zum Zuführen von Verpackungen (200) entlang einer Zuführungsrichtung (K); **gekennzeichnet durch**
- eine Kippeinheit (20), die entlang des Förderpfads (T) angeordnet ist und die Folgendes umfasst:
- einen Rotor (21), der ein erstes Gehäuse (22) zum Aufnehmen mindestens eines ersten Behälters und ein zweites Gehäuse (23) zum Aufnehmen mindestens eines zweiten Behälters umfasst, wobei der Rotor (21) um eine horizontale Drehachse (I) drehbar ist, um das erste und das zweite Gehäuse (22, 23) zu veranlassen, gegenseitig ihre Positionen zwischen einer ersten Position (P1) zum Beschicken der Behälter und einer zweiten Position (P2) zum Entladen der Produkte aus den Behältern (100) in die Verpackungen (200), die entlang der Zuführungsrichtung (K) zugeführt werden, zu tauschen,
- mindestens ein erstes Verschlusselement (25A, 25B) zum Verschließen einer oberen Öffnung (100A', 100B') des in dem ersten Gehäuse (22) positionierten Behälters und mindestens ein zweites Verschlusselement (26A, 26B) zum Verschließen einer oberen Öffnung (100A', 100B') des in dem zweiten Gehäuse (23) positionierten Behälters, wobei das mindestens eine erste Verschlusselement (25A, 25B) und das mindestens eine zweite Verschlusselement (26A, 26B) an dem Rotor (21) derart montiert sind, dass sie zwischen einer Verschlussposition und einer Position zum Öffnen der Behälter beweglich sind, und
- eine Steuereinheit (50), die dazu ausgelegt ist, das erste oder das zweite Verschlusselement (25A, 25B, 26A, 26B) in die Öffnungsposition zu steuern, um die Produkte durch die obere Öffnung des Behälters, der in dem ersten oder zweiten Gehäuse (22, 23) positioniert ist, zu entladen, wenn sich das erste oder das zweite Gehäuse (22, 23) in der Entladeposition (P2) befinden.

2. Maschine nach Anspruch 1, wobei das erste und das zweite Gehäuse (22, 23) in Bezug auf die Drehachse des Rotors diametral entgegengesetzt zueinander positioniert sind.

3. Maschine nach Anspruch 1 oder 2, wobei
- das erste Gehäuse (22) durch eine Unterseite (22A) und durch zwei seitliche Widerlagerteile (22B) begrenzt ist, die in Bezug auf die Unterseite entgegengesetzt zueinander sind, wobei sich die Unterseite (22A) und die seitlichen Teile (22B) entlang einer Richtung erstrecken, die parallel zur Drehachse (I) des Rotors ist;
- das zweite Gehäuse (23) durch eine Unterseite (23A) und durch zwei seitliche Widerlagerteile (23B) begrenzt ist, die in Bezug auf die Unterseite entgegengesetzt zueinander sind, wobei sich die Unterseite (23A) und die seitlichen Teile (23B) entlang einer Richtung erstrecken, die parallel zur Drehachse (I) des Rotors ist; und
- das erste und das zweite Gehäuse (22, 23) in entgegengesetzten Richtungen um die Drehachse (I) des Rotors ausgerichtet sind, so dass sich bei dem ersten oder dem zweiten Gehäuse, das sich in der Beschickungsposition (P1) befindet, die seitlichen Widerlagerteile (22B, 23B) über der Unterseite (22A, 23A) des Gehäuses befinden, und sich bei dem zweiten oder dem ersten Gehäuse, das sich in der Entladeposition (P2) befindet, die seitlichen Widerlagerteile (23B, 22B) über der Unterseite (23A, 22A) des Gehäuses befinden.

4. Maschine nach Anspruch 3, wobei jedes des mindestens einen ersten Verschlusselements (25A 25B) und des mindestens einen zweiten Verschlusselements (26A, 26B) auf einer Seite des jeweiligen Fachs (22, 23) positioniert ist und um eine Drehachse schwenken kann, die parallel zur Drehachse (I) des Rotors ist, und wobei jedes des mindestens einen Verschlusselements (25A, 25B) und des mindestens einen zweiten Verschlusselements (26A, 26B) einen Abdeckungskörper (25', 26') umfasst, der über ein entsprechendes seitliches Widerlagerteil des Gehäuses hin zur Innenseite des Gehäuses zum Verschließen der oberen Öffnung des in dem Gehäuse positionierten Behälters hinausragt.

5. Maschine nach Anspruch 4, wobei in der Öffnungsposition der Abdeckungskörper (25', 26') weiterhin mit einem Teil davon über den seitlichen Widerlagerteil (22B, 23B) hinausragt, so dass er den in dem Gehäuse positionierten Behälter vertikal stützt.

6. Maschine nach Anspruch 3, wobei das mindestens eine erste Verschlusselement zwei Verschlusselemente (25A, 25B) umfasst, die auf entgegengesetzten Seiten des ersten Gehäuses (22) zum gezielten Öffnen und Verschließen entsprechender oberer Öffnungen (100A', 100B') des in dem ersten Gehäuse (22) positionierten Behälters (100) positioniert sind, und wobei das mindestens eine zweite Verschlusselement zwei Verschlusselemente (26A, 26B) umfasst, die auf entgegengesetzten Seiten des zweiten Gehäuses (23) zum gezielten Öffnen und Verschließen jeweiliger oberer Öffnungen (100A', 100B') des in dem zweiten Gehäuse (23) positionierten Behälters (100) positioniert sind.

7. Maschine nach Anspruch 3, wobei der mindestens eine Förderer (30) einen Einlaufkanal (31) zum Bringen der die Produkte enthaltenden Behälter zu der Kippeinheit (20) und einen Auslaufkanal (32) zum Bringen der leeren Behälter zu einem Auslauf der Maschine umfasst, wobei in der Beschickungsposition (P1) das erste oder das zweite Gehäuse (22, 23) den Einlaufkanal (31) und den Auslaufkanal (32) miteinander verbindet, und wobei die Maschine eine Ziehvorrichtung (60) zum Bringen mindestens eines Behälters, der sich in dem Einlaufkanal (31) befindet, zu dem ersten oder dem zweiten Gehäuse (22, 23) der Kippeinheit (20) und zeitgleich mindestens eines in dem ersten oder dem zweiten Gehäuse (22, 23) positionierten Behälters zu dem Auslaufkanal (32) umfasst.

8. Maschine nach Anspruch 7, wobei das erste und das zweite Gehäuse (22, 23) der Kippeinheit (20) jeweils eine derartige Länge entlang der Drehachse (I) des Rotors aufweisen, dass es eine vorbestimmte Anzahl an Behältern unterbringen kann, und wobei die Ziehvorrichtung (60) eine Reihe von gleichmäßig voneinander beabstandeten Eingriffselementen (62) zum zeitgleichen Ineingriffbringen einer Anzahl an Behältern, die gleich der vorbestimmten Anzahl ist, umfasst, wobei sie in einem Abstand eines vorgegebenen Abstandsmaßes voneinander gehalten werden.

9. Maschine nach einem der vorhergehenden Ansprüche, umfassend eine Einheit zum Abgeben einer vorbestimmten Menge an Wasser in die Verpackungen (200), in die die Produkte entladen wurden.

10. Verfahren zum Verpacken von Produkten (S), die in Behältern zu einer Verpackungsmaschine transportiert werden,
umfassend die folgenden Schritte:
- an einer Position (P1) zum Beschicken der Behälter, Aufnehmen mindestens eines ersten Produkte enthaltenden Behälters in einem ersten Gehäuse (22), das in einem Rotor (21) einer Kippeinheit (20) hergestellt ist, der sich um eine horizontale Drehachse (I) drehen kann;
- Drehen des Rotors (21) um die Drehachse (I), bis das erste Gehäuse (22) in eine Position (P2) zum Entladen der Produkte aus den Behältern gebracht wurde, und zeitgleich Bringen eines zweiten in dem Rotor (21) bereitgestellten Gehäuses (23) in die Position (P1) zum Beschicken der Behälter;
- Zuführen einer oder mehrerer Verpackungen (200), vorzugsweise Beutel, zu einem Bereich unterhalb der Entladeposition (P2);
- Antreiben eines ersten Elements (25A, 25B) zum Verschließen der Behälter, das mit dem ersten Gehäuse (22) assoziiert ist, von einer Verschlussposition in eine Öffnungsposition, um die Produkte durch eine obere Öffnung (100A', 100B') des mindestens einen in dem ersten Gehäuse (22) positionierten ersten Behälters in eine oder mehrere darunterliegende Verpackungen (200) zu entladen;
- an der Beschickungsposition (P1), Aufnehmen mindestens eines zweiten Produkte enthaltenden Behälters in dem zweiten Gehäuse (23) des Rotors (21);
- Drehen des Rotors (21) um die Drehachse (I), um das erste und das zweite Gehäuse (22, 23) zu veranlassen, ihre Positionen zu tauschen, um das erste Gehäuse (22) und den mindestens einen ersten Behälter, leer, in die Beschickungsposition (P1) und das zweite Gehäuse (23) und den mindestens einen zweiten, die Produkte enthaltenden Behälter in die Entladeposition (P2) zu bringen;
- Zuführen einer neuen Verpackung oder neuer Verpackungen (200') in den Bereich unterhalb der Entladeposition (P1);
- Antreiben eines zweiten Elements (26A, 26B) zum Verschließen der Behälter, das mit dem zweiten Gehäuse (23) assoziiert ist, von einer Verschlussposition in eine Öffnungsposition, um die Produkte durch eine obere Öffnung (100A', 100B') des mindestens einen in dem zweiten Gehäuse (23) positionierten zweiten Behälters in eine neue darunterliegende Verpackung oder neue darunterliegende Verpackungen (200; 200') zu entladen.

11. Verfahren nach Anspruch 10, wobei
- das erste Gehäuse (22) durch eine Unterseite (22A) und durch zwei seitliche Widerlagerteile (22B) begrenzt ist, die in Bezug auf die Unterseite (22A) entgegengesetzt zueinander sind;
- das zweite Gehäuse (23) durch eine Unterseite (23A) und durch zwei seitliche Widerlagerteile (23B) begrenzt ist, die in Bezug auf die Unterseite (23A) entgegengesetzt zueinander sind; und
- der Schritt zum Aufnehmen mindestens eines ersten Behälters in einem ersten Gehäuse (22) oder Aufnehmen mindestens eines zweiten Behälters in einem zweiten Gehäuse (23) Bringen, mittels einer Ziehvorrichtung (60), des mindestens einen ersten oder zweiten Behälters von einem Einlaufkanal (31) stromaufwärts der Kippeinheit (20) in das erste oder das zweite Gehäuse (22, 23), und zeitgleich Bringen mindestens eines leeren Behälters, der in dem ersten oder dem zweiten Gehäuse (22, 23) positioniert ist, zu einem Auslaufkanal (32) stromabwärts der Kippeinheit (20) umfasst.

12. Verfahren nach Anspruch 11, wobei der Schritt zum Bringen mindestens eines oder zweiten Behälters von einem Einlaufkanal (31) stromaufwärts der Kippeinheit (20) in das erste oder das zweite Gehäuse (22, 23) Bringen einer vorbestimmten Anzahl an Behältern in das erste oder das zweite Gehäuse (22, 23) umfasst, und der Schritt zum Bringen eines leeren Behälters, der in dem ersten oder dem zweiten Gehäuse (22, 23) positioniert ist, zu einem Auslaufkanal (32) Bringen einer Anzahl von Behältern, die gleich der vorbestimmten Anzahl ist, zu dem Auslaufkanal (32) umfasst.

## Revendications

1. Machine (10) d'emballage de produits de l'industrie du tabac, en particulier du tabac humide, comprenant :
- au moins un transporteur (30) permettant d'alimenter une pluralité de récipients (100) contenant les produits le long d'un trajet de transport (T) ;
- une unité (40) permettant d'alimenter des emballages (200) le long d'une direction d'alimentation (K) ;
**caractérisée par**
- une unité de retournement (20) qui est disposée le long du trajet de transport (T) et qui comprend :
- un rotor (21) comprenant un premier logement (22) permettant de recevoir au moins un premier récipient, et un second logement (23) permettant de recevoir au moins un second récipient, le rotor (21) étant rotatif autour d'un axe horizontal de rotation (I) pour permuter les positions des premier et second logements (22, 23) en va-et-vient, entre une première position (P1) de chargement des récipients et une seconde position (P2) de déchargement des produits à partir des récipients (100), dans les emballages (200) amenés selon la direction d'alimentation (K),
- au moins un premier élément de fermeture (25A, 25B), permettant de fermer une ouverture supérieure (100A', 100B') du récipient positionné dans le premier logement (22), et au moins un second élément de fermeture (26A, 26B), permettant de fermer une ouverture supérieure (100A', 100B') du récipient positionné dans le second logement (23), l'au moins un premier élément de fermeture (25A, 25B) et l'au moins un second élément de fermeture (26A, 26B) étant montés sur le rotor (21) pour être mobiles entre une position de fermeture et une position d'ouverture des récipients, et
- une unité de commande (50) configurée pour commander le premier ou le second élément de fermeture (25A, 25B, 26A, 26B) en position d'ouverture afin de décharger les produits par l'ouverture supérieure du récipient positionné dans le premier ou le second logement (22, 23), lorsque le premier ou le second logement (22, 23) est en position de déchargement (P2).

2. Machine selon la revendication 1, dans laquelle le premier et le second logements (22, 23) sont diamétralement opposés l'un à l'autre par rapport à l'axe de rotation du rotor.

3. Machine selon la revendication 1 ou 2, dans laquelle
- le premier logement (22) est délimité par un fond (22A) et par deux parties latérales de butée (22B), qui sont opposées l'une à l'autre par rapport au fond, le fond (22A) et les parties latérales (22B) s'étendant le long d'une direction parallèle à l'axe de rotation (I) du rotor ;
- le second logement (23) est délimité par un fond (23A) et par deux parties latérales de butée (23B), qui sont opposées l'une à l'autre par rapport au fond, le fond (23A) et les parties latérales (23B) s'étendant le long d'une direction parallèle à l'axe de rotation (I) du rotor ; et
- le premier et le second logements (22, 23) sont orientés dans des directions opposées autour de l'axe de rotation (I) du rotor de sorte que le premier ou le second logement qui est en position de chargement (P1) a les parties latérales de butée (22B, 23B) au-dessus du fond (22A, 23A) du logement, et que le second ou le premier logement qui est en position de déchargement (P2) a les parties latérales de butée (23B, 22B) au-dessus du fond (23A, 22A) du logement.

4. Machine selon la revendication 3, dans laquelle chacun parmi l'au moins un premier élément de fermeture (25A, 25B) et l'au moins un second élément de fermeture (26A, 26B) est positionné sur un côté du compartiment respectif (22, 23), et peut pivoter autour d'un axe de rotation qui est parallèle à l'axe de rotation (I) du rotor, et dans laquelle chacun parmi l'au moins un élément de fermeture (25A, 25B) et l'au moins un second élément de fermeture (26A, 26B) comprend un corps de recouvrement (25', 26') qui dépasse une partie latérale de butée correspondante du logement, vers l'intérieur du logement, pour fermer l'ouverture supérieure du récipient positionné dans le logement.

5. Machine selon la revendication 4, dans laquelle, en position d'ouverture, le corps de recouvrement (25', 26') se maintient, avec une partie dépassant la partie latérale de butée (22B, 23B), de manière à soutenir verticalement le récipient positionné dans le logement.

6. Machine selon la revendication 3, dans laquelle l'au moins un premier élément de fermeture comprend deux éléments de fermeture (25A, 25B) positionnés sur les côtés opposés du premier logement (22), pour ouvrir et fermer sélectivement les ouvertures supérieures correspondantes (100A', 100B') du récipient (100) positionné dans le premier logement (22), et dans laquelle l'au moins un second élément de fermeture comprend deux éléments de fermeture (26A, 26B) positionnés sur les côtés opposés du second logement (23), pour ouvrir et fermer sélectivement les ouvertures supérieures respectives (100A', 100B') du récipient (100) positionné dans le second logement (23).

7. Machine selon la revendication 3, dans laquelle l'au moins un transporteur (30) comprend un canal d'entrée (31) pour amener les récipients contenant les produits à l'unité de retournement (20), et un canal de sortie (32) pour amener les récipients vides à une sortie de la machine, dans laquelle, dans la position de chargement (P1), le premier ou le second logement (22, 23) relie le canal d'entrée (31) et le canal de sortie (32) l'un à l'autre, et dans lequel la machine comprend un dispositif d'étirage (60) pour amener au moins un récipient qui se trouve dans le canal d'entrée (31) vers le premier ou le second logement (22, 23) de l'unité de retournement (20), et simultanément au moins un récipient positionné dans le premier ou le second logement (22, 23), vers le canal de sortie (32).

8. Machine selon la revendication 7, dans laquelle le premier et le second logements (22, 23) de l'unité de retournement (20) ont chacun une longueur, le long de l'axe de rotation (I) du rotor, telle qu'ils peuvent loger un nombre prédéterminé de récipients, et dans laquelle le dispositif d'étirage (60) comprend une série d'éléments d'engagement (62) également espacés les uns des autres, pour engager simultanément un nombre de récipients égal au nombre prédéterminé, en les maintenant à une distance les uns des autres d'un pas donné.

9. Machine selon l'une quelconque des revendications précédentes, comprenant une unité de distribution d'une quantité prédéterminée d'eau dans les emballages (200) dans lesquels les produits ont été déchargés.

10. Procédé d'emballage de produits (S) transportés dans des récipients vers une machine d'emballage, comprenant les étapes suivantes :
- à une position (P1) de chargement des récipients, la réception d'au moins un premier récipient contenant des produits, dans un premier logement (22) réalisé dans un rotor (21) d'une unité de retournement (20), qui peut tourner autour d'un axe horizontal de rotation (I) ;
- la rotation du rotor (21) autour de l'axe de rotation (I) jusqu'à ce que le premier logement (22) soit amené dans une position (P2) de déchargement des produits des récipients et, simultanément, l'amenée d'un second logement (23) prévu dans le rotor (21) dans la position (P1) de chargement des récipients ;
- l'alimentation d'un ou de plusieurs emballages (200), de préférence des sachets, dans une zone sous-jacente à la position de déchargement (P2) ;
- l'entraînement d'un premier élément (25A, 25B) de fermeture des récipients associé au premier logement (22), d'une position de fermeture à une position d'ouverture, de manière à décharger les produits à travers une ouverture supérieure (100A', 100B') de l'au moins un premier récipient positionné dans le premier logement (22), dans un ou plusieurs emballages sous-jacents (200) ;
- en position de chargement (P1), la réception d'au moins un second récipient contenant des produits, dans le second logement (23) du rotor (21) ;
- la rotation du rotor (21) autour de l'axe de rotation (I) pour faire permuter les positions du premier et du second logements (22, 23), de manière à amener le premier logement (22) et l'au moins un premier récipient, vide, en position de chargement (P1), et le second logement (23) et l'au moins un second récipient, contenant les produits, en position de déchargement (P2) ;
- l'introduction d'un ou de plusieurs nouveaux emballages (200') dans la zone sous-jacente à la position de déchargement (P1) ;
- l'entraînement d'un second élément (26A, 26B) de fermeture des récipients associé au second logement (23), d'une position de fermeture à une position d'ouverture, de manière à décharger les produits à travers une ouverture supérieure (100A', 100B') de l'au moins un second récipient positionné dans le second logement (23), dans un ou plusieurs nouveaux emballages sous-jacents (200 ; 200').

11. Procédé selon la revendication 10, dans lequel
- le premier logement (22) est délimité par un fond (22A) et par deux parties latérales de butée (22B), qui sont opposées l'une à l'autre par rapport au fond (22A) ;
- le second logement (23) est délimité par un fond (23A) et par deux parties latérales de butée (23B), qui sont opposées l'une à l'autre par rapport au fond (23A) ; et
- l'étape de réception d'au moins un premier récipient dans un premier logement (22), ou de réception d'au moins un second récipient dans un second logement (23), comprend, au moyen d'un dispositif d'étirage (60), l'amenée de l'au moins un premier ou second récipient à partir d'un canal d'entrée (31) en amont de l'unité de retournement (20), dans le premier ou le second logement (22, 23), et simultanément l'amenée d'au moins un récipient vide qui est positionné dans le premier ou le second logement (22, 23), vers un canal de sortie (32) en aval de l'unité de retournement (20).

12. Procédé selon la revendication 11, dans lequel l'étape d'amenée d'au moins un premier ou second récipient à partir d'un canal d'entrée (31) en amont de l'unité de retournement (20) dans le premier ou le second logement (22, 23), consiste à amener un nombre prédéterminé de récipients dans le premier ou le second logement (22, 23), et l'étape d'amenée d'un récipient vide positionné dans le premier ou le second logement (22, 23) vers un canal de sortie (32), consiste à amener un nombre de récipients égal au nombre prédéterminé vers le canal de sortie (32).
